# EUROPEAN PATENT APPLICATION

(11) **EP 4 787 741 A1**
(43) Date of publication of application: **05.08.2026**
(21) Application number: 26155126.1
(22) Date of filing: 29.01.2026
(51) Int. Cl.: H04B 17/00, H01Q 3/26, H04B 17/12, H04B 17/13, H04B 17/21, H04B 7/06, H04B 7/08, H04W 24/02, H01Q 3/28, H04B 17/20

(54) **PANEL LEVEL CALIBRATION FOR FRONT END MODULES IN A PHASED ARRAY ANTENNA**

(30) Priority: 31.01.2025 US 202563752510 P
(71) Applicant: Space Exploration Technologies Corp., Hawthorne, California 90250 (US)
(72) Inventor: AGAH, Amir, HAWTHORNE, 90250 (US); SOTNICK, Elliot, HAWTHORNE, 90250 (US); PEPIN, Eric, HAWTHORNE, 90250 (US); SCHULZE, Kim W., HAWTHORNE, 90250 (US)
(74) Representative: Mewburn Ellis LLP

(57) **Abstract**

A phased array antenna includes a plurality of antenna elements configured to operate in a transmit mode and a receive mode, and a plurality of FEMs configured to operate corresponding antenna elements to transmit and receive RF signals. The phased array includes a DBF configured to translate between the RF signals and corresponding digital signals, the DBF coupled to the FEMs over at least one RF distribution network. A phased array includes a modem coupled with the DBF and configured to supply the corresponding digital signals for the transmit mode, process the corresponding digital signals for the receive mode, initiate a calibration, in the transmit mode and in the receive mode, of the FEMs based on an aggregate power consumption of the FEMs, and write compensation values for the FEMs, for the transmit mode and the receive mode, to a nonvolatile memory, the compensation values computed based on the calibration.

## Description

### CROSS-REFERENCE TO RELATED APPLICATIONS

The present application claims the benefit of, and priority to, U.S. Provisional Patent Application No. 63/752,510, filed January 31, 2025, entitled "PANEL LEVEL CALIBRATION FOR FRONT END MODULES IN A PHASED ARRAY ANTENNA", the contents of which are hereby incorporated by reference in their entirety.

### TECHNICAL FIELD

The present disclosure pertains to phased array antennas for satellite communication systems and, more particularly, systems and methods for panel level calibration for front end modules in a phased array antenna.

### BACKGROUND

An antenna (such as a dipole antenna) typically generates radiation in a pattern that has a preferred direction. For example, the generated radiation pattern is stronger in some directions, i.e., the main lobes, and weaker in other directions, i.e., the side lobes. Likewise, when receiving electromagnetic signals, the antenna has the same preferred direction. Signal quality (e.g., signal to noise ratio or SNR), whether in transmitting or receiving scenarios, can be improved by aligning the preferred direction of the antenna with a direction of the target or source of the signal. A phased array antenna can be composed of an array of antenna elements, each having an electronically controlled phase and amplitude. An advantage of a phased array antenna is its ability to transmit and/or receive signals in a preferred direction (e.g., the antenna's beamforming ability) by adjusting each antenna element's phase delay and amplitude to "direct" the resulting transmitted or received wavefront.

Phased array antennas and, more specifically for transmitting, each antenna element in the array, must be fed one or more radio frequency (RF) signals, or beams, to be emitted; each beam being derived from a common digital signal. Similarly, when receiving, the beams received at each antenna element in the array must be routed and combined to reconstruct one or more received digital signals. As phased arrays increase in number of elements, the distribution and combination network for the RF signals tends to degrade the RF signals as they propagate further and through more components, either to an antenna element for transmission or to a beamformer for processing.

It would be advantageous to configure phased array antennas with more antenna elements, improved phase and/or gain stability, while reducing size of the corresponding components, e.g., integrated circuits, chips, chip packages, circuit boards, etc. Accordingly, embodiments of the present disclosure are directed to these and other improvements in phased array antennas or portions thereof.

### SUMMARY

In some examples, systems and techniques are described for providing panel level calibration for front end modules (FEMs) for a phased array antenna.

In some aspects, the techniques described herein relate to a phased array antenna, including: a plurality of antenna elements configured to operate in a transmit mode and a receive mode; a plurality of FEMs configured to operate corresponding antenna elements of the plurality of antenna elements to transmit and receive radio frequency (RF) signals; a digital beamformer (DBF) configured to translate between the RF signals and corresponding digital signals, the DBF coupled to the plurality of FEMs over at least one RF distribution network; a modem coupled with the DBF and configured to: supply the corresponding digital signals for the transmit mode; process the corresponding digital signals for the receive mode; initiate a calibration, in the transmit mode and in the receive mode, of the plurality of FEMs based on an aggregate power consumption of the plurality of FEMs; and write compensation values for the plurality of FEMs, for the transmit mode and the receive mode, to a non-volatile memory, the compensation values computed based on the calibration.

In some aspects, the techniques described herein relate to a method of panel level calibration of a plurality of FEMs in a phased array antenna, the method including: sending an instruction to enter a selected mode, of a transmit mode or a receive mode, to at least one DBF corresponding to the plurality of FEMs; sending, by the at least one DBF, the instruction to the plurality of FEMs; measuring aggregate power consumption of the plurality of FEMs while in the selected mode; computing compensation values for the plurality of FEMs based on a comparison of measured aggregate power and an expected aggregate power; and writing the compensation values to a non-volatile memory for employing by the plurality of FEMs during operation in the selected mode.

This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

The foregoing, together with other features and aspects, will become more apparent upon referring to the following specification, claims, and accompanying drawings.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIG. 1 is a block diagram of a portion of an example phased array antenna system in accordance with some examples of the present disclosure;
FIG. 2 is a top view of an example antenna lattice in accordance with some examples of the present disclosure;
FIG. 3 is a functional block diagram of an example embodiment of a front end module in accordance with some examples of the present disclosure;
FIG. 4 is a flow diagram of an example method of panel level calibration, in transmit mode, of FEMs in a phased array in accordance with some examples of the present disclosure; and
FIG. 5 is a flow diagram of an example method of panel level calibration, in receive mode, of FEMs in a phased array in accordance with some examples of the present disclosure.

### DETAILED DESCRIPTION

Embodiments of the disclosed apparatuses and methods relate to phased array antenna systems and, in particular, a panel level calibration of front end modules (FEMs) in a phased array antenna. The disclosed panel level calibration enables elimination of component level, or "wafer level," calibration of FEMs, and further enables elimination of dedicated components added for the purpose of calibration prior to assembly of the phased array antenna. Examples of the devices, systems, and/or methods of various embodiments are provided below. An embodiment of the devices, systems, and/or methods can include any one or more, and any combination of, the examples described below.

References in the specification to "one embodiment," "an embodiment," "an illustrative embodiment," "an example," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one A, B, and C" means at least one of (A), at least one of (B), and at least one of (C). Conversely, items listed in the form of "at least one of A, B, or C" can mean (A); (B); (C); (A and B); (B and C); (A and C); or (A, B, and C).

Language such as "top surface", "bottom surface", "vertical", "horizontal", and "lateral" in the present disclosure is meant to provide orientation for the reader with reference to the drawings and is not intended to be the required orientation of the components or to impart orientation limitations into the claims.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, it may not be included or may be combined with other features.

In a phased array antenna, each antenna element is driven by a dedicated radio frequency (RF) transmitter, or transmit circuit, and/or connected to a dedicated RF receiver, or receive circuit. The "RF transmitter" and "RF receiver" are generally used herein to refer to the end-to-end collection of components operating between a digital system, i.e., a modem, and an antenna, or antenna element, for the transmit path and the receive path, respectively, including, for example and without limitation, digital baseband beamforming components, RF waveform generators/receivers, and analog beamforming components. In some implementations, all such components are packaged together in a beamformer chip. In the disclosed phased array antenna systems, digital baseband beamforming components and RF waveform generators/receivers are packaged together for one or more given antenna elements in a digital beamformer (DBF). The DBF communicates with a modem, for example, to exchange digital data for transmitting and receiving. When transmitting, the DBF's digital baseband beamforming components construct one or more phase encoded beams to carry the digital data. The DBF's RF waveform generator components convert the one or more phase encoded beams from digital to analog, up-convert to RF, and amplify for transmission by the array of antenna elements. When receiving, the DBF's RF waveform receiver components amplify beams received by the array of antenna elements, down-convert to baseband, and digitize analog signals (e.g., convert from analog to digital). The digital beams are then recombined, phase decoded, and digitally filtered before communicating the received digital data to the modem.

In the disclosed phased array antenna systems, the DBF is paired with at least one "front end module" (FEM), generally incorporating analog beamforming components. The FEM could be a distinct FEM device, or chip, driving one or more antenna elements; or the FEM could be a component grouping within a DBF device, or chip, in which the RF transmitter and/or RF receiver are packaged. A DBF package, or a DBF and FEM pair, may include numerous RF transmitters and/or RF receivers for corresponding antenna elements. Alternatively, each DBF and FEM could be packaged independently for a single antenna element.

When transmitting, each antenna element in the phased array transmits an RF signal with a respective desired phase and amplitude to emit one or more desired directional beams. In some cases, a desired phase and amplitude are achieved by applying a particular phase shift and/or gain at the FEM for each antenna element. In certain embodiments, the particular phase shift and/or gain to be applied can be based on an instruction from the DBF or other controller. The phase shifts and gains can be selected for each antenna element to produce constructive interference in a transmit direction (e.g., a beam steering direction). One or more RF signals can be distributed to each FEM from a DBF. In phased array antennas having a large number of antenna elements, there may be numerous DBFs, each driving a network of FEMs, and each FEM driving one or more antenna elements. Accordingly, one or more baseband digital signals is distributed to each DBF, conditioned, and/or up converted to RF or IF, and then distributed to each FEM.

When receiving, the phased array is configured to receive from a particular beam steering direction. The FEM for each antenna element applies desired phase shifts and/or gains to produce constructive interference of signals received over the air from the particular beam steering direction (e.g., a receive direction). Each antenna element in the phased array receives the same over the air RF signal at a different position on the array, generally resulting in a different phase and amplitude of the received RF signals at different antenna elements depending on a transmission location of the over the air RF signal, the relative position of the transmitter and the receiving phased array, and the position of the antenna element in the antenna lattice of the phased array. The desired phase shift and/or gain associated with the particular beam steering direction can be applied at the respective FEMs for each antenna element. In certain embodiments, the particular phase shift and/or gain to be applied can be based on an instruction from a DBF or other controller. In certain embodiments, by carefully applying gain and/or phase shifts to the received signals from the antenna elements, the received signals from different antenna elements can interfere constructively for signals received from the beam steering direction. The phase shifted and/or gain adjusted received RF signals are then routed to the DBF for recombination and/or down-conversion to a baseband or IF signal. As described above, in phased array antennas having a large number of antenna elements, there may be numerous DBFs, each receiving RF signals from a network of FEMs, and each FEM receiving from one or more antenna elements. Accordingly, the received RF signal is routed through each FEM to a corresponding DBF.

Beams for transmission may be distributed serially by a DBF over a serial distribution channel to each FEM in a given FEM series, or "daisy chain." Each FEM distributes each beam to each of its corresponding antenna elements. Similarly, beams received over the air are routed from each antenna element to its corresponding FEM, and then routed serially through each FEM in a given FEM series to its corresponding DBF. The transmit RF signal path and the receive RF signal path each can include one or more stages of amplification. Conventionally, the transmit RF signal path includes one or more power amplifiers in series between each DBF and each of its corresponding FEMs, and/or in series between each FEM and each of its corresponding antenna elements. Likewise, the conventional receive RF signal path includes one or more low noise amplifiers (LNAs) in series between each antenna element and its corresponding FEM, and/or in series between each FEM and its corresponding DBF. Accordingly, as the number of antenna elements in a given phased array antenna increases, so do the numbers of amplifiers.

Each stage of amplification within the transmit RF signal path and the receive RF signal path can exhibit variations in its power consumption and power output. Generally, the power output, i.e., gain, end-to-end for each transmit RF signal path and each receive RF signal path should be carefully calibrated to ensure the desired directionality, i.e., the desired phase and amplitude, of the beams for transmission when they reach the corresponding antenna element, and the received beams when they reach the corresponding DBF. One conventional method of calibration is to calibrate each component, chip, or integrated circuit (IC) before assembling them into the phased array antenna. For example, such calibration, sometimes referred to as a "wafer level" calibration, can be performed on each FEM chip before being installed on the phased array antenna. Wafer level calibration of the FEM generally requires a number of additional components for performing the calibration. For example, each FEM can include a non-volatile memory device for storing calibration data, such as calibration routines or resulting compensation values. Such memory may be embodied, for example, in flash memory, read-only memory (ROM), or electrically erasable programmable read-only memory (EEPROM), among others. Each FEM may further include additional power components for executing calibration routines, e.g., for supplying sufficient signal power to effectively test the transmit RF signal path and the receive RF signal path without relying on signal power supplied by the phased array antenna or, more specifically, a DBF. For example, an FEM may include a charge pump circuit to boost "on-chip" voltage to supply sufficient signal power to the transmit RF signal path and the receive RF signal path. Alternatively, the FEM may include other passive or active components to assist in conducting a wafer level calibration. Generally, the wafer level calibration can be conducted initially upon fabrication, employing the additional components such as the calibration non-volatile memory and calibration power components, and then repeating calibration sparingly after that point. Consequently, the additional calibration components are often employed only once.

As phased array antennas increase in number of antenna elements and, for example, the number of corresponding FEMs, the space required for components, chips, systems, and subsystems corresponding to the antenna elements increases proportionally. It is desirable to reduce the dimensional size of a given component, chip, system, or subsystem to enable more compact implementations of phased array antennas with an increasing number of antenna elements. Accordingly, the disclosed panel level calibration of FEMs for a phased array antenna enables the elimination of certain calibration components on the FEM that are often used only sparingly and often only once. For example, the disclosed panel level calibration enables the elimination of the calibration non-volatile memory and calibration power components, thereby reducing the space required for the FEMs components and, in certain embodiments, the physical dimensions required for the FEM overall.

The disclosed panel level calibration of FEMs includes a more coarse calibration of FEMs aggregated at least partially over the whole phased array, or over the whole "panel," instead of, for example, wafer level calibration. For example, a group of FEMs can be calibrated in the aggregate to determine appropriate compensation values for all the FEMs in the group, i.e., compensating each FEM equally. The group of FEMs can be selected as each FEM on a given serial distribution sequence and driven by a common RF input/output (RFIO) port of a corresponding DBF. Alternatively, the group of FEMs can be selected as all FEMs on the panel that originate from a common production tape or reel. In yet another alternative, the group of FEMs can be selected as a particular spatial section of the panel, or may include all FEMs on the phased array antenna. The disclosed panel level calibration yields transmit compensation values and receive compensation values for the FEMs selected for the group. The compensation values can be, for example, gain adjustments for one or more amplifier stages for a given signal path, i.e., transmit gain compensation for the transmit RF signal path and receive gain compensation for the receive RF signal path. Because the panel level calibration of the FEMs is more coarse, or less precise, in certain embodiments, the FEMs include amplification stages having a greater range of gain settings to enable wider swings in compensation values.

The disclosed panel level calibration can be initiated and coordinated, in certain embodiments, by a modem for the phased array antenna. For example, the modem can initiate a panel level calibration routine for a given group of FEMs by instructing, e.g., using a digital communication, one or more corresponding DBFs to operate the group of FEMs, e.g., in transmit mode or receive mode. In some embodiments, the FEMs are operated with a particular stimulus in the transmit mode and the receive mode, and then measure the power output to the antenna elements for the transmit mode, and the power output to the one or more corresponding DBFs for the receive mode. In certain embodiments, the stimulus for calibration can be an RF test signal. Alternatively, the stimulus can be a DC test signal. In other embodiments, the stimulus can be omitted and idle power consumption can be measured while in transmit mode and/or while in receive mode. In certain embodiments, the measurement of power can be an aggregate measurement of current consumed by the group of FEMs, which can be compared to an expected aggregate current consumption for the group of FEMs to determine compensation values for the group of FEMs. Compensation values can be computed as an average gain adjustment for each amplification stage within the group of FEMs to correct for the aggregate difference in measured aggregate current consumption and the expected, or desired, aggregate current consumption. Compensation values can include distinct transmit compensation values and receive compensation values that correspond to the distinct transmit amplification stages and receive amplification stages.

Compensation values for the group of FEMs can be stored in non-volatile memory for the modem or the one or more corresponding DBFs. Compensation values can be recalled from the non-volatile memory and employed in the group of FEMs when operating in transmit mode and/or receive mode. In alternative embodiments, a DBF (or a combination of multiple DBFs) may initiate and coordinate the panel level calibration, and the yielded compensation values for the group of FEMs can be stored in memory for the modem or the one or more DBFs.

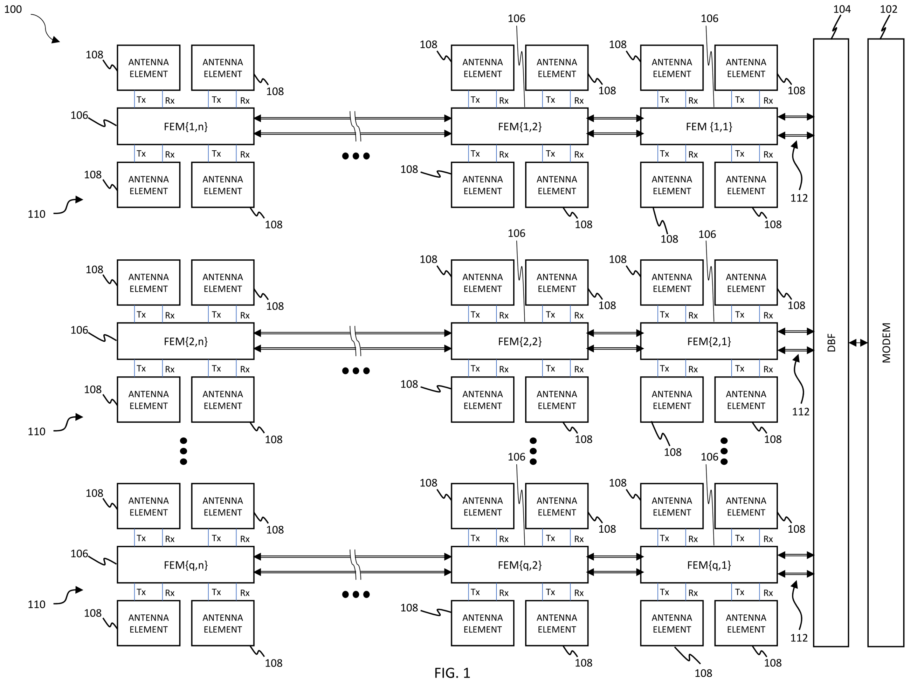

FIG. 1 is a block diagram of an example phased array antenna system 100 in accordance with some embodiments of the present disclosure. Phased array antenna system 100, also referred to as a node, communication device, device, and/or the like, is a component of a larger communications system. In some embodiments, phased array antenna system 100 is included in a wireless communications system, a wideband communications system, a satellite-based communications system, a terrestrial-based communications system, a non-geostationary (NGO) satellite communications system, a low Earth orbit (LEO) satellite communications system, and/or the like. For example, without limitation, phased array antenna system 100 can comprise a satellite, a user terminal associated with user device(s), a gateway, a repeater, or other device capable of receiving and transmitting signals with another device of a satellite communications system.

Phased array antenna system 100 includes a modem 102, a digital beamformer (DBF) chip (referred to herein as DBF 104), a plurality of FEMs 106, and a plurality of antenna elements 108. Modem 102 electrically couples to one or more DBFs, such as, for example, DBF 104. DBF 104 electrically couples with a number, q, of corresponding series, or "daisy chains," of the plurality of FEMs 106. Each of the q daisy chains of FEMs 106 is referred to herein as an FEM series 110 and forms an RF distribution network. Each FEM series 110 electrically couples serially with a number, n, of FEMs 106. Each DBF chip electrically coupled with modem 102 is similarly configured and associated with respective series of FEMs 106. DBF 104 may also be referred to as a DBF chip, a transmit/receive (Tx/Rx) DBF chip, a Tx/Rx chip, a transceiver, a DBF transceiver, and/or the like.

Each FEM 106 of the q FEM series 110 electrically couples with a respective subset of the plurality of antenna elements 108, e.g., M antenna elements 108. A same subset of antenna elements can be used for transmit and receive signal paths within phased array antenna system 100. As an example, without limitation, DBF 104 supports q FEM series 110, each supporting up to 4 FEMs 106 (e.g., n=4) and up to 16 antenna elements (M=16) of the plurality of antenna elements 108. Alternatively, DBF 104 may support more or fewer antenna elements without departing from the scope of the present disclosure.

The phased array antenna system 100 includes a number, L, of DBFs 104. Each of the plurality of DBFs 104 may be electrically coupled to another in a daisy chain arrangement (not shown), i.e., the ith DBF of the plurality of DBFs 104 is electrically coupled with the (*i*th+*1*) DBF. For example, DBF 104 may be electrically coupled between modem 102 and a second DBF (not shown), and the second DBF may be electrically coupled between the second DBF and a third DBF, and so on.

DBF 104 includes an integrated circuit (IC) chip or IC chip package including a plurality of pins, in which at least a first subset of the plurality of pins is configured to communicate signals with its electrically coupled DBF chip(s) (and/or modem 102). A second subset of the plurality of pins of DBF 104 is configured to receive, for example, an LO signal (or reference clock signal) from a distribution network (not shown). The LO signal is generated by an LO (not shown). In certain embodiments, the LO is an IC chip. In some embodiments, the LO is included within an IC chip with one or more additional components, e.g., DBF 104. For example, LO signal can be distributed to or within DBF 104 to mixers within DBF 104 to facilitate performance of frequency up-conversion to radio frequency (RF) signals to be transmitted and/or frequency down-conversion of received RF signals. The LO may include, for example and without limitation, a transmit phase-locked loop (Tx PLL), a receive phase-locked loop (Rx PLL), a frequency multiplier, a multiplexer (MUX) for selecting between transmit and receiver, and/or a power amplifier (PA).

A third subset of the plurality of pins on the IC package of DBF 104 is configured to transmit RF signals and/or receive RF signals with FEMs 106 and antenna elements 108. DBF 104, for example, includes a plurality of RFIO ports 112. Each FEM series 110 is electrically coupled with one or more RFIO ports 112. Each FEM series 110 includes one or more, or n, serially fed FEMs 106. For example, a first FEM series 110 includes a first FEM 106 (e.g., FEM {1,1}), a second FEM 106 (e.g., FEM {1,2}), and so on up to an nth FEM 106 (e.g., FEM {1,n}). Each FEM 106 illustrated in FIG. 1 is annotated with a {row, column} designation, where the "row" designation indicates to which FEM series 110 for DBF 104 a given FEM 106 belongs (e.g., 1 to q), and the "column" designation indicates where in that FEM series 110 the given FEM is positioned (e.g., 1 to n). For example, FEM {2, 1} is an FEM 106 in a second FEM series and a first FEM 106 in that FEM series 110. Likewise, FEM {q, n} is an FEM 106 in a qth FEM series and an nth FEM 106 in that FEM series 110.

RFIO ports 112, when transmitting, are configured to feed an RF signal to their respective FEM series 110. The RF signal is the result of frequency up-conversion performed within DBF 104 and is formed based on a transmit LO signal, i.e., the RF signal for transmission has a phase and frequency that is a function of the phase and frequency of the transmit LO signal. The RF signal is distributed to each FEM series 110 over an equal length signal path to minimize phase shift differences between signals arriving at the inputs of, for example, a first FEM series 110 and second FEM series 110. In some cases, phase shift differences between signals arriving at different FEM series 110 may result in phase errors in the RF signals provided to corresponding antenna elements 108 that emit the RF signals. Each FEM 106 may perform additional analog beamforming including, for example, phase shifting and/or amplification, before feeding each antenna element 108.

Referring again to the embodiment shown in FIG. 1, each of RFIO ports 112, when receiving, is configured to receive an RF signal from one of FEM series 110. The RF signal is received over the air at antenna elements 108 for each of the FEM series 110. Each FEM 106 may perform analog beamforming on the received RF signal, including, for example, phase shifting and/or amplification. In certain embodiments, each FEM 106 may also perform down-conversion to baseband or an IF. The RF (or IF or baseband) signals are then combined and propagated through the respective FEM series toward DBF 104 at RFIO port 112. DBF 104, upon receipt of the RF signal, performs frequency down-conversion to a baseband or IF for further signal processing including, for example, analog to digital conversion.

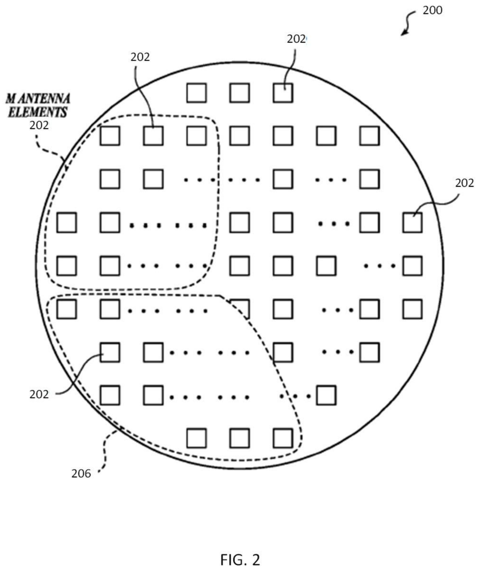

FIG. 2 is an example illustration of a top view of an antenna lattice 200 in accordance with some embodiments of the present disclosure. Antenna lattice 200, sometimes referred to as a "panel," may be used, for example, in phased array antenna system 100 and, more specifically, for the plurality of antenna elements 108 shown in FIG. 1. Antenna lattice 200 includes a plurality of antenna elements 202 arranged in a particular pattern to define a particular antenna aperture. The antenna aperture is the area through which power is radiated by or to the plurality of antenna elements 202. Antenna lattice 200 defines a phased array antenna. A phased array antenna synthesizes a specified electric field (phase and amplitude) across an aperture.

Referring to FIGS. 1 and 2, a subset 206 of the plurality of antenna elements 202 shown in FIG. 2 can form the M antenna elements 108 corresponding to a particular DBF 104. The remaining subsets of antenna elements of the plurality of antenna elements 202 may be similarly associated with other DBFs.

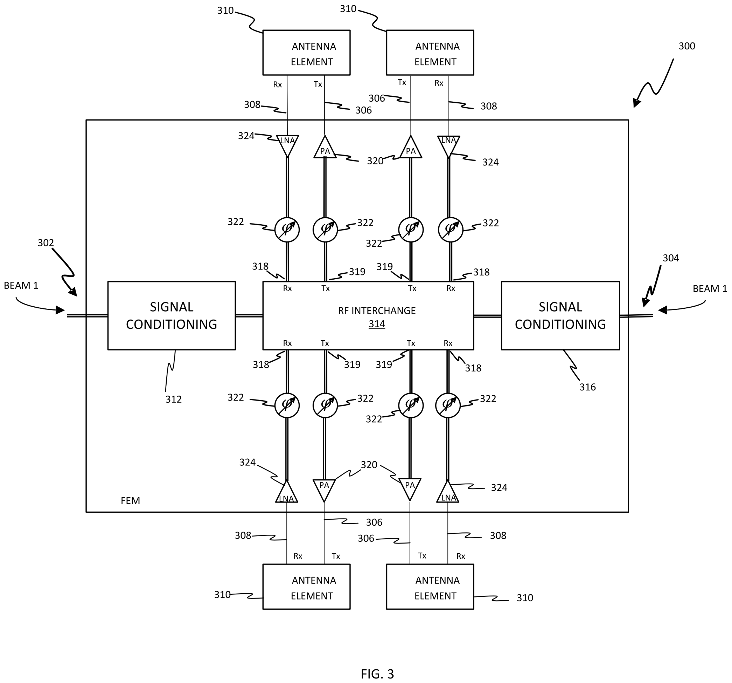

FIG. 3 is a functional block diagram of an example FEM 300 for use in a phased array antenna system, such as phased array antenna system 100 shown in FIG. 1. For example, FEM 300 may be included in a serially fed chain of FEMs, such as FEM series 110 shown in FIG. 1. FEM 300 can assume any position within such a series, e.g., FEM 300 can be a first FEM in a serially fed chain, a last FEM in a serially fed chain, or FEM 300 can be a FEM at any position in between. FEM 300 can be similar to and perform similar functions to FEM 106 shown in FIG. 1. FEM 300 transmits and/or receives RF signals, or beams, on an RF serial channel of the serially fed chain via an RF serial port 302 and an RF serial port 304, which electrically couple FEM 300 with a prior and/or subsequent FEM in the FEM series, or, e.g., a DBF such as DBF 104 shown in FIG. 1. Similarly, FEM 300 includes transmit (Tx) ports 306 and receive (Rx) ports 308 through which beams are communicated to and from a plurality of antenna elements 310. The plurality of antenna elements 310 can be similar to and perform similar functions to the plurality of antenna elements 108 shown in FIG. 1 or antenna elements 202 shown in FIG. 2.

RF serial port 302 and RF serial port 304 of FEM 300 compose opposing ends of an RF serial channel through FEM 300 that further includes a signal conditioning stage 312, an RF interchange 314, and another signal conditioning stage 316. The RF serial channel extends between RF serial port 302 and RF serial port 304, and is configured to propagate (i) one beam for transmission from RF serial port 302 to RF serial port 304, (ii) one beam, received over the air, from RF serial port 304 to RF serial port 302, (iii) one beam from RF serial port 302 to antenna elements 310 for transmission over the air, and (iv) one beam received over the air from antenna elements 310 to RF serial port 302. In alternative embodiments, FEM 300 may include a second RF serial channel for propagating a second beam.

RF interchange 314 combines signals, in a receive (Rx) mode, received over the air at the plurality of antenna elements 310 and routed to RF interchange through combination ports 318. RF interchange 314 distributes signals, to be emitted by the plurality of antenna elements 310 in a transmit (Tx) mode, through distribution ports 319.

RF serial port 302 and RF serial port 304, and the RF serial channel extending therebetween, are illustrated in FIG. 3 employing differential transmission lines. In alternative embodiments, RF serial ports 302 and RF serial port 304, and the RF serial channel extending therebetween, are implemented with single ended transmission lines.

More specifically, referring to the differential implementation shown in FIG. 3 in the Tx mode, RF interchange 314 can distribute an RF signal, i.e., a differential signal, received at RF serial port 302 of FEM 300 and conditioned by signal conditioning stage 312, to distribution ports 319 and RF serial port 304 of FEM 300. For example, in Tx mode, the differential RF signal, or beam, may be received at RF serial port 302, propagate through signal conditioning stage 312, and enter RF interchange 314 for distribution. The signal is distributed to each of the plurality of antenna elements 310 through respective distribution ports 319. As illustrated in FIG. 3, the differential RF signal can be converted to a single-ended signal by the respective PA 320. In some implementations, differential to single-ended conversion may be performed subsequent to the respective PA 320.

The RF signals distributed for transmission over the air by each antenna element 310 can be amplified in one or more stages along the path from RF serial port 302 to plurality of antenna elements 310. For example, RF signals may be amplified by a respective PA 320, a differential amplifier, a variable gain amplifier, or an amplifier within signal conditioning stage 312, or any combination of amplification stages. Additionally, in at least some embodiments, RF signals distributed for transmission over the air by each antenna element 310 can be phase shifted by a respective phase shifter 322 before transmission through a respective Tx port 306 to a corresponding one of the plurality of antenna elements 310. Phase shifters 322 can apply a phase shift to the corresponding distributed signals to generate a coherently combined transmitted signal (i.e., emitted by the phased array) in a desired direction (e.g., the beam steering direction). The plurality of antenna elements 310 coupled to Tx ports 306 emit, or radiate, the amplified and/or phase adjusted RF signal.

In the Rx mode, the RF interchange 314 combines respective RF signals received at RF serial port 304 and conditioned by the signal conditioning stage 316, with signals received over the air by each of the plurality of antenna elements 310. In receive mode, an RF signal, or beam, is received over the air by antenna elements 310. The RF signals from each of the plurality of antenna elements 310 are routed through respective Rx ports 308 toward RF interchange 314 at combination ports 318 for combination with signals received through RF serial port 304, i.e., from one or more subsequent FEMs in the series. The received signal from each of the plurality of antenna elements 310 can be amplified in one or more stages along the path from ports 308 at plurality of antenna elements 310, through combination ports 318, to RF serial port 302. For example, received signals may be amplified by low noise amplifiers (LNAs) 324, a differential amplifier, a variable gain amplifier, or an amplifier within signal conditioning stage 312, or any combination of amplification stages. Additionally, in at least some embodiments, received signals are phase shifted by phase shifters 322. As illustrated in FIG. 3, the differential RF signal can be converted to a single-ended signal by the respective LNA 324 for each antenna element. In some implementations, differential to single-ended conversion may be performed subsequent to the respective LNA 324.

Although the Rx signal path, as illustrated in FIG. 3, includes a single LNA 324 and a single phase shifter 322 coupled to each of the plurality of antenna elements 310, in some cases, a separate phase shifter 322 and/or LNA 324 can be coupled to each of the plurality of antenna elements 310 for receiving multiple beams. Similarly, the Tx signal path, as illustrated in FIG. 3, can include a separate phase shifter 322 for transmitting and/or multiple PA 320 can be coupled to each of the plurality of antenna elements 310 for transmitting multiple beams. Likewise, signal conditioning stage 312, RF interchange 314, and signal conditioning stage 316 may be implemented with multiple differential signal paths for combining, routing, and conditioning multiple received beams, and for conditioning and distributing multiple beams for transmission.

RF interchange 314, when transmitting, splits RF signals for transmission and distributes them to distribution ports 319. When receiving, RF interchange combines RF signals received at combination ports 318 for routing to RF serial port 302. Each time a beam is split or combined within RF interchange 314, the signal experiences a power loss. For example, when splitting an RF signal received at an input port to two output ports, the power is divided approximately equally, effectively exhibiting a 3 dB loss from the input port to either one output port. When combining, for example, two signals, the combined signal may exhibit a small, but non-zero, power loss. Signal conditioning stage 312 and signal conditioning stage 316, in certain example embodiments, may include components such as, for example, and without limitation, bidirectional amplifiers (such as bidirectional amplifier 330), additional LNAs, PAs, variable gain amplifiers (VGAs), transformers, differential amplifiers, and/or phase shifters (e.g., for Rx and/or Tx). In certain embodiments, signal conditioning stage 312 and signal conditioning stage 316 include active buffers, such as a bidirectional buffer or amplifier, to compensate for losses exhibited by, e.g., transmission lines, RF interchange 314, and for losses incurred when each beam is split or combined. Active buffers also can increase the isolation with the external environment (e.g., the rest of the PCB). FEM 300 can be configured, e.g., utilizing signal conditioning stages 312 and 316, to provide an equal gain among each of the plurality of antenna elements 310 and, furthermore, equal gain among multiple instances of FEM 300 connected in series, such as multiple instances of FEM 106 in FEM series 110, shown in FIG. 1. The gain applied within each instance of FEM 300 and for each transmit signal path and for each receive signal path is subject to a calibration and resulting gain compensation to ensure the desired gain along those paths.

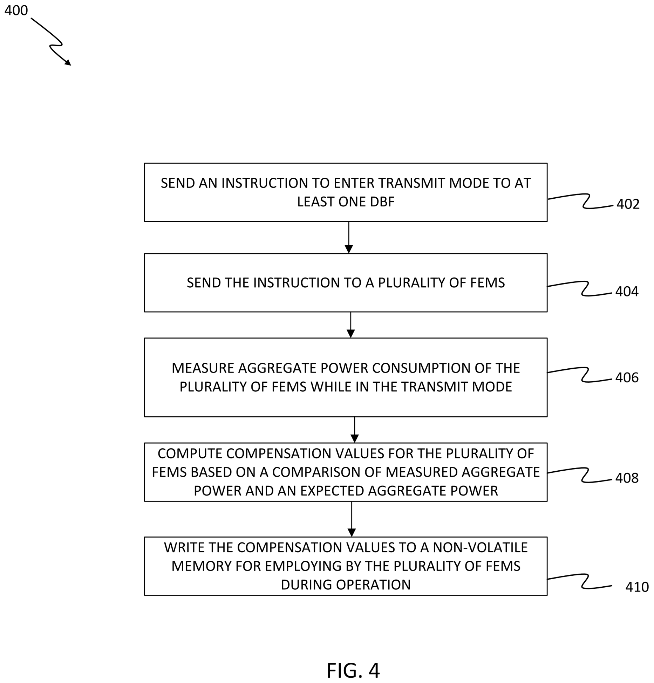

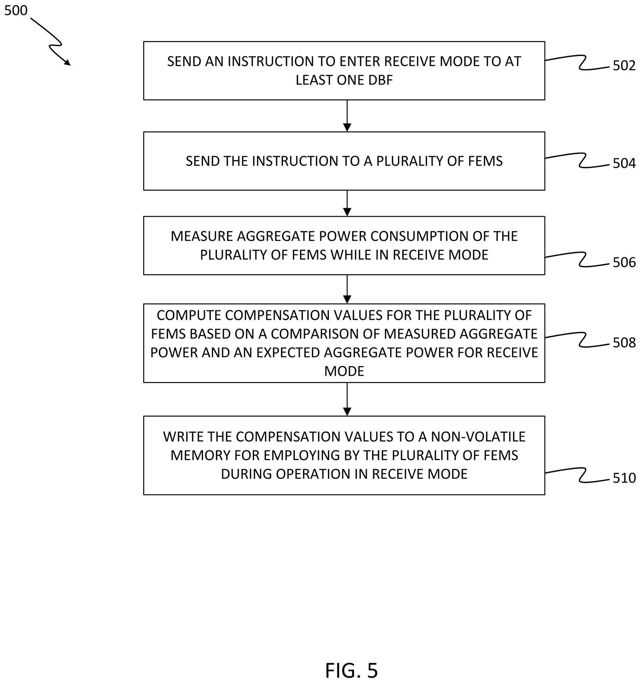

FIG. 4 is a flow diagram of an example method 400 of panel level calibration of FEMs in a phased array antenna, such as phased array antenna system 100 shown in FIG. 1, or antenna lattice 200 shown in FIG. 2. In particular, method 400 is for panel level calibration, in a transmit mode, for a plurality of FEMs, such as a plurality of FEM 106 or FEM 300. Likewise, FIG. 5 is a flow diagram of an example method 500 of panel level calibration, in a receive mode, of a plurality of FEMs in a phased array antenna, such as phased array antenna system 100 shown in FIG. 1, or antenna lattice 200 shown in FIG. 2.

Referring to FEM 300 shown in FIG. 3, each stage of amplification within the transmit RF signal path, e.g., PA 320 or signal conditioning stage 312, can exhibit variations in its power consumption and power output. Accordingly, each transmit RF signal path can be calibrated to generate compensation values, or gain adjustments, to ensure the desired gain along those transmit RF signal paths. Rather than calibrating each FEM 300 in isolation, i.e., wafer level calibration, the disclosed method 400 of panel level calibration enables calibrating a plurality of FEMs aggregated at least partially over the whole phased array, e.g., a plurality of FEMs 106 in phased array antenna system 100, shown in FIG. 1.

Referring to FIG. 1, a group of FEMs 106 can be calibrated in the aggregate to determine appropriate compensation values for all the FEMs 106 in the group, i.e., compensating each FEM 106 equally. The group of FEMs 106 can be selected, for example, as each FEM 106 on a given RF distribution network, or FEM series 110, and driven by a common RFIO port 112 of the corresponding DBF 104. More specifically, for example, the group of FEMs 106 can be FEM {2, 1} through FEM {2, n}. Alternatively, for example, the group of FEMs 106 can be selected as ones originating from a common production tape and/or reel. In yet another alternative, the group of FEMs 106 can be selected as a particular spatial section of the panel of phased array antenna system 100. Referring to FIG. 2, for example, the group of FEMs 106 can be selected for a corresponding subset of antenna elements 202 on antenna lattice 200, such as, for example, subset 206.

Referring to FIG. 4 and FIG. 1, method 400 can be initiated, for example, by modem 102 or, alternatively, by DBF 104. Modem 102 sends 402 an instruction to enter transmit mode to at least one DBF 104. Modem 102 can initiate the panel level calibration routine for a given group, or plurality, of FEMs 106 by instructing one or more corresponding DBFs 104 to further instruct the group of FEMs 106 to enter the transmit mode. The one or more DBFs 104 send 404 the instruction to the group of FEMs 106.

In alternative embodiments, method 400 can include a stimulus to be used for calibration. In such embodiments, the modem 102 may send a digital calibration signal to the one or more DBFs 104. DBF 104 translates the digital calibration signal to an analog signal that will be the stimulus for calibration. The analog signal, in certain embodiments, can be an RF test signal. Alternatively, in certain embodiments, the stimulus for calibration can be a DC signal. DBF 104 distributes the analog signal to the group of FEMs 106 corresponding to DBF 104 through, for example, a distribution network, for calibration for the transmit mode. As shown in FIG. 1, the distribution network can be a serial distribution network, e.g., a daisy chain, through the group of FEMs 106. Each of the FEMs 106 in the group of FEMs 106 distributes the analog signal to a plurality of corresponding antenna elements 108. Accordingly, for the transmit mode, the group of FEMs 106 pass the calibration stimulus through each of the transmit RF signal paths and, in particular, each of the amplification stages on those transmit RF signal paths.

Referring again to FIG. 1 and FIG. 4, the aggregate power consumption of the group of FEMs 106 is measured 406, e.g., while idling in transmit mode. Aggregate power consumption can be measured 406, for example, by a given FEM 106 and reported digitally to DBF 104 or modem 102. Alternatively, for example, DBF 104 can measure 406 the aggregate power consumption directly. The measured aggregate power can then be compared to an expected aggregate power consumption for the group of FEMs 106 to compute 408 compensation values for the group of FEMs 106. The difference between measured aggregate power consumption and expected aggregate power consumption can be corrected for by adjusting gain settings on average within each amplification stage of the group of FEMs 106. More specifically, for a given number of amplification stages within the group of FEMs 106 for transmit mode, the average gain adjustment applied at each amplification stage in the transmit RF signal paths aggregates across the group of FEMs 106 to yield the desired compensation of aggregate power consumption for transmit mode.

Aggregate power consumption can be measured, for example, as current supplied to the group of FEMs 106 when in transmit mode. In particular, the measurement of power can be an aggregate measurement of current consumed by the group of FEMs 106 that can be compared to an expected aggregate current consumption for the group of FEMs 106. Compensation values computed 408 for the group of FEMs 106 are, for example, average adjustments to the gain for each of the transmit RF signal paths, which can include one or more amplification stages within a given FEM 106.

In certain embodiments, further calibration can be conducted for single FEMs 106 for both transmit mode and receive mode to enable more precise calibration, or conducted for smaller groups of FEMs 106.

The comparison and computation 408 of compensation values can be performed by modem 102 and written 410 to non-volatile memory for employing by the group of FEMs 106 during operation in the transmit mode. The non-volatile memory can be integrated with modem 102 or can be separate from modem 102, e.g., within DBF 104 or another chip within phased array antenna system 100. In certain alternative embodiments, the computation 408 of the compensation values can be performed by DBF 104 and written 410 to the non-volatile memory, which can be integrated within DBF 104, within modem 102, or within another chip of phased array antenna system 100.

During operation, modem 102, DBF 104, or a given FEM 106 can recall the compensation values from the non-volatile memory to employ when in transmit mode. For example, the compensation values can be recalled and employed at startup of phased array antenna system 100. Alternatively, the compensation values can be recalled and employed after a calibration cycle, e.g., periodically or when performance degrades.

Referring to FIG. 1 and FIG. 5, method 500 can be initiated, for example, by modem 102 or, alternatively, by DBF 104. For example, as shown in FIG. 5, modem 102 sends 502 an instruction to enter receive mode to at least one DBF 104. Modem 102 can initiate the panel level calibration routine for a given group, or plurality, of FEMs 106 by instructing one or more corresponding DBFs 104 to further instruct the group of FEMs 106 to enter the receive mode. The one or more DBFs 104 send 504 the instruction to the group of FEMs 106.

In alternative embodiments, method 500 can include a stimulus to be used for calibration. In such embodiments, analog signals are generated for calibrating a group, or plurality, of FEMs 106 in receive mode. The analog signals can be generated, for example, by a transmitter corresponding to a given receive RF signal path. For example, for a given antenna path from DBF 104 to a corresponding antenna element 108, the analog signal can be inserted into the receive RF signal path by its corresponding transmit RF signal path. Each FEM 106 of the group of FEMs 106 routes the analog signals through the FEM 106 to a corresponding DBF for combination.

The receive RF signal paths include, for example, one or more stages of amplification, each of which consumes power when operating in idle and when actively receiving. The aggregate power consumption of the group of FEMs 106 is measured 506, e.g., while idling in the receive mode. Aggregate power consumption can be measured 506, for example, by a given FEM 106 and reported digitally to DBF 104 or modem 102. Alternatively, for example, DBF 104 can measure 506 the aggregate power consumption directly.

Measured aggregate power is then compared to expected aggregate power for the group of FEMs 106 when in receive mode, and compensation values are computed 508 based on that comparison. The difference between measured aggregate power consumption and expected aggregate power consumption in receive mode can be corrected for by adjusting gain settings on average within each amplification stage of the group of FEMs 106. For a given number of amplification stages within the group of FEMs 106 for receive mode, the average gain adjustment applied at each amplification stage in the receive RF signal paths aggregates across the group of FEMs 106 to yield the desired compensation of aggregate power consumption for receive mode.

Aggregate power consumption can be measured, for example, as current supplied to the group of FEMs 106 when in receive mode. In particular, the measurement of power can be an aggregate measurement of current consumed by the group of FEMs 106, which can be compared to an expected aggregate current consumption for the group of FEMs 106. Compensation values computed 508 for the group of FEMs 106 are, for example, average adjustments to the gain for each of the receive RF signal paths, which can include one or more amplification stages within a given FEM 106.

The computed compensation values are written 510 to non-volatile memory for employing by the group of FEMs 106 during operation in receive mode. The non-volatile memory can be integrated with modem 102 or can be separate from modem 102, e.g., within DBF 104 or another chip within phased array antenna system 100. In certain alternative embodiments, the computation 508 of the compensation values can be performed by DBF 104 and written 510 to the non-volatile memory, which can be integrated within DBF 104, within modem 102, or within another chip of phased array antenna system 100.

During operation, modem 102, DBF 104, or a given FEM 106 can recall the compensation values from the non-volatile memory to employ when in receive mode. For example, the compensation values can be recalled and employed at startup of phased array antenna system 100. Alternatively, the compensation values can be recalled and employed after a calibration cycle, e.g., periodically or when performance degrades.

The following disclosure sets out certain aspects of the disclosed invention in the form of clauses corresponding to the claims. These clauses are provided to ensure explicit and literal support for the claims as filed, and for any future amendments, under the requirements of various jurisdictions. Each clause should be understood as forming part of the description and as an independent disclosure of inventive subject matter.

Clause 1. A phased array antenna, comprising: a plurality of antenna elements configured to operate in a transmit mode and a receive mode; a plurality of front end modules (FEMs) configured to operate corresponding antenna elements of the plurality of antenna elements to transmit and receive radio frequency (RF) signals; a digital beamformer (DBF) configured to translate between the RF signals and corresponding digital signals, the DBF coupled to the plurality of FEMs over at least one RF distribution network; a modem coupled with the DBF and configured to: supply the corresponding digital signals for the transmit mode; process the corresponding digital signals for the receive mode; initiate a calibration, in the transmit mode and in the receive mode, of the plurality of FEMs based on an aggregate power consumption of the plurality of FEMs; and write compensation values for the plurality of FEMs, for the transmit mode and the receive mode, to a non-volatile memory, the compensation values computed based on the calibration.

Clause 2. The phased array antenna of clause 1, wherein the plurality of FEMs are coupled to an RF input/output (RFIO) port of the DBF serially on the RF distribution network.

Clause 3. The phased array antenna of clause 2 further comprising a second plurality of FEMs configured to drive corresponding antenna elements of a second plurality of antenna elements to transmit and receive RF signals, wherein the second plurality of FEMs are coupled to a second RFIO port of the DBF serially on the RF distribution network, and wherein the modem is further configured to: initiate a second calibration of the second plurality of FEMs based on an aggregate power consumption of the second plurality of FEMs in the transmit mode and in the receive mode; and write compensation values for the second plurality of FEMs to the non-volatile memory, the compensation values computed based on the second calibration.

Clause 4. The phased array antenna of clause 1, wherein the modem comprises the non-volatile memory.

Clause 5. The phased array antenna of clause 1, wherein the DBF comprises the non-volatile memory.

Clause 6. The phased array antenna of clause 1, wherein the at least one RF distribution network comprises a serial network.

Clause 7. A method of panel level calibration of the plurality of front end modules (FEMs) in the phased array antenna of any of clauses 1-6, the method comprising: sending an instruction to enter a selected mode, of the transmit mode or the receive mode, to the DBF corresponding to the plurality of FEMs; sending, by the DBF, the instruction to the plurality of FEMs; measuring aggregate power consumption of the plurality of FEMs while in the selected mode; computing compensation values for the plurality of FEMs based on a comparison of measured aggregate power and an expected aggregate power; and writing the compensation values to the non-volatile memory for employing by the plurality of FEMs during operation in the selected mode.

Clause 8. The method of clause 7 further comprising: sending to the DBF a digital calibration signal; translating, by the DBF, the digital calibration signal to an analog signal for use as a stimulus for the panel level calibration; distributing the analog signal to the plurality of FEMs over the at least one distribution network; and distributing the analog signal, from the plurality of FEMs, to corresponding antenna elements for the plurality of FEMs.

Clause 9. The method of clause 8, wherein the analog signal includes: a radio frequency test signal, or a direct current signal.

Clause 10. The method of clause 8, wherein distributing the analog signal to the corresponding antenna elements includes distributing the stimulus to amplification stages on transmit radio frequency signal paths.

Clause 11. The method of clause 7, wherein measuring the aggregate power consumption comprises: measuring, by each of the plurality of FEMs, respective aggregate power consumption of the plurality of FEMs; and reporting the respective aggregate power consumption to the DBF or the modem.

Clause 12. The method of clause 7, wherein measuring the aggregate power consumption comprises measuring the aggregate power consumption at the at least one DBF.

Clause 13. The method of clause 7, wherein measuring aggregate power consumption is performed while the plurality of FEMs are idling in the transmit mode.

Clause 14. The method of clause 7, wherein measuring aggregate power consumption is performed while the plurality of FEMs are idling in receive mode.

Clause 15. The method of clause 7, wherein measuring aggregate power consumption is performed while the plurality of FEMs are operating on an analog signal as a stimulus.

Clause 16. The method of clause 7, wherein measuring aggregate power consumption comprises measuring as an aggregate current consumption for the plurality of FEMs.

Clause 17. The method of clause 7, wherein employing the compensation values comprises applying the compensation values by adjusting gain settings on average within each amplification stage of the plurality of FEMs.

The clauses above are provided for clarity of disclosure and support, and do not limit the scope of the appended claims. Features described in any one clause may be combined with features of any other clause, except where such combinations are clearly incompatible.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the embodiments and examples provided herein. However, it will be understood by one of ordinary skill in the art that the embodiments may be practiced without these specific details. For clarity of explanation, in some instances the present technology may be presented as including individual functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using computer-executable instructions that are stored or otherwise available from computer-readable media. Such instructions can include, for example, instructions and data that cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, embedded systems, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

Many embodiments of the technology described herein may take the form of computer- or controller-executable instructions, including routines executed by a programmable computer or controller. Those skilled in the relevant art will appreciate that the technology can be practiced on computer/controller systems other than those shown and described above. The technology can be embodied in a special-purpose computer, controller or data processor that is specifically programmed, configured or constructed to perform one or more of the computer-executable instructions described above. Accordingly, the terms "computer" and "controller" as generally used herein refer to any data processor and can include Internet appliances and hand-held devices (including palm-top computers, wearable computers, cellular or mobile phones, multiprocessor systems, processor-based or programmable consumer electronics, network computers, minicomputers and the like). Information handled by these computers can be presented at any suitable display medium, including an organic light emitting diode (OLED) display or liquid crystal display (LCD).

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. This application is intended to cover any adaptations or variations of the embodiments discussed herein. Therefore, it is manifestly intended that embodiments described herein be limited only by the claims.

## Claims

1. A phased array antenna, comprising:
a plurality of antenna elements configured to operate in a transmit mode and a receive mode;
a plurality of front end modules (FEMs) configured to operate corresponding antenna elements of the plurality of antenna elements to transmit and receive radio frequency (RF) signals;
a digital beamformer (DBF) configured to translate between the RF signals and corresponding digital signals, the DBF coupled to the plurality of FEMs over at least one RF distribution network;
a modem coupled with the DBF and configured to:
supply the corresponding digital signals for the transmit mode;
process the corresponding digital signals for the receive mode;
initiate a calibration, in the transmit mode and in the receive mode, of the plurality of FEMs based on an aggregate power consumption of the plurality of FEMs; and
write compensation values for the plurality of FEMs, for the transmit mode and the receive mode, to a non-volatile memory, the compensation values computed based on the calibration.

2. The phased array antenna of claim 1, wherein the plurality of FEMs are coupled to an RF input/output (RFIO) port of the DBF serially on the RF distribution network.

3. The phased array antenna of claim 2 further comprising a second plurality of FEMs configured to drive corresponding antenna elements of a second plurality of antenna elements to transmit and receive RF signals, wherein the second plurality of FEMs are coupled to a second RFIO port of the DBF serially on the RF distribution network, and wherein the modem is further configured to:
initiate a second calibration of the second plurality of FEMs based on an aggregate power consumption of the second plurality of FEMs in the transmit mode and in the receive mode; and
write compensation values for the second plurality of FEMs to the non-volatile memory, the compensation values computed based on the second calibration.

4. The phased array antenna of claim 1, wherein the modem comprises the non-volatile memory.

5. The phased array antenna of claim 1, wherein the DBF comprises the non-volatile memory.

6. The phased array antenna of claim 1, wherein the at least one RF distribution network comprises a serial network.

7. A method of panel level calibration of the plurality of front end modules (FEMs) in the phased array antenna of any of claims 1-6, the method comprising:
sending an instruction to enter a selected mode, of the transmit mode or the receive mode, to the DBF corresponding to the plurality of FEMs;
sending, by the DBF, the instruction to the plurality of FEMs;
measuring aggregate power consumption of the plurality of FEMs while in the selected mode;
computing compensation values for the plurality of FEMs based on a comparison of measured aggregate power and an expected aggregate power; and
writing the compensation values to the non-volatile memory for employing by the plurality of FEMs during operation in the selected mode.

8. The method of claim 7 further comprising:
sending to the DBF a digital calibration signal;
translating, by the DBF, the digital calibration signal to an analog signal for use as a stimulus for the panel level calibration;
distributing the analog signal to the plurality of FEMs over the at least one distribution network; and
distributing the analog signal, from the plurality of FEMs, to corresponding antenna elements for the plurality of FEMs.

9. The method of claim 8, wherein the analog signal includes:
a radio frequency test signal, or
a direct current signal.

10. The method of claim 8, wherein distributing the analog signal to the corresponding antenna elements includes distributing the stimulus to amplification stages on transmit radio frequency signal paths.

11. The method of claim 7, wherein measuring the aggregate power consumption comprises:
measuring, by each of the plurality of FEMs, respective aggregate power consumption of the plurality of FEMs; and
reporting the respective aggregate power consumption to the DBF or the modem.

12. The method of claim 7, wherein measuring the aggregate power consumption comprises measuring the aggregate power consumption at the at least one DBF.

13. The method of claim 7, wherein measuring aggregate power consumption is performed while the plurality of FEMs are idling in the transmit mode.

14. The method of claim 7, wherein measuring aggregate power consumption is performed while the plurality of FEMs are idling in receive mode.

15. The method of claim 7, wherein measuring aggregate power consumption is performed while the plurality of FEMs are operating on an analog signal as a stimulus.

16. The method of claim 7, wherein measuring aggregate power consumption comprises measuring as an aggregate current consumption for the plurality of FEMs.

17. The method of claim 7, wherein employing the compensation values comprises applying the compensation values by adjusting gain settings on average within each amplification stage of the plurality of FEMs.
